# EUROPEAN PATENT APPLICATION

(11) **EP 3 263 531 A1**
(43) Date of publication of application: **03.01.2018**
(21) Application number: 16382307.3
(22) Date of filing: 29.06.2016
(51) Int. Cl.: C02F 3/12, C02F 1/44

(54) **METHOD FOR OPERATING A MEMBRANE BIOREACTOR OF A WATER TREATMENT SYSTEM AND CORRESPONDING MEMBRANE BIOREACTOR AND WATER TREATMENT SYSTEM**

(71) Applicant: Universitat de Girona, 17071 Girona (ES); Fundació Institut Catala de Recerca de l'Aigua (ICRA), 17003 Girona (ES)
(72) Inventor: BLANDIN, Gaetan, 49360 Maulevrier (FR); RODRÍGUEZ-RODA LAYRET, Ignasi, 17240 Llagostera (ES); COMAS I MATAS, Joaquim, 17003 Girona (ES)
(74) Representative: Curell Suñol S.L.P.

(57) **Abstract**

Method for operating a membrane bioreactor of a water treatment system for water production and corresponding bioreactor and water treatment system. The MBR comprises a mixed liquor basin (2) and a membrane stack (4) with a plurality of UF or MF membrane modules (6) operable to produce a non-potable water stream. Depending on the incoming wastewater and the water production needs the method comprises a replacing step in which at least one UF or MF membrane module (6) is replaced by at least one corresponding semipermeable membrane module (8) in the same membrane stack (4). With the semipermeable membrane module (8) a forward osmosis step is carried out circulating a draw solution having a higher osmotic pressure than the osmotic pressure of said mixed liquor such as to produce a diluted draw solution stream downstream of said membrane stack (4).

## Description

### Field of the invention

The invention refers mainly to the technology field of wastewater treatment and in particular to water treatment systems comprising a membrane bioreactor.

More particularly the invention relates to a method for operating a membrane bioreactor of a water treatment system for water production or water reuse, said membrane bioreactor comprising a mixed liquor basin and a membrane stack with a plurality of UF or MF membrane modules operable to produce a non-potable water stream.

Additionally, the invention relates to a membrane bioreactor comprising a mixed liquor basin and a membrane stack, said membrane stack comprising a plurality of supports for receiving and a plurality of UF or MF membrane modules to be arranged in said plurality of supports.

Finally, the invention relates also to a water treatment system comprising a membrane bioreactor according to the invention.

### Definitions

Water treatment system: in the context of the invention a water treatment system refers to all features required in order to obtain purified water, either potable or non -potable, from a wastewater stream for water production or reuse. The system includes the membrane bioreactor according to the invention, as well as all other pre and post-treatment features required for obtaining the purified water.

Membrane stack: in the context of the invention a membrane stack refers to the structure or chassis in which the membrane modules of a membrane bioreactor or osmotic bioreactor are mounted within corresponding supports adapted to receive these membrane modules in a removable manner.

Membrane module: in the context of the invention a membrane module, being it a semipermeable membrane for forward osmosis o any other type of membrane, refers to the assembly of a support member and the corresponding membrane mounted thereon, independently of the type of membrane construction used, as for example, plate and frame, hollow fibres, or the like. The membrane module must also have the corresponding outlet and eventually inlets, if forward osmosis is carried out, in order for it to properly work.

Membrane: in the context of the invention the term membrane refers to the filtering structure as such, that is a sheet like material or a tube like material as well as other types of filtering structures having the corresponding pore size in order to reject the desired particles.

Mixed liquor: in the context of the invention the term mixed liquor refers to the mixture of wastewater and activated sludge contained in the mixed liquor basin of the membrane bioreactor for biological treatment.

Activated sludge: in the context of the invention the activated sludge refers to the active biological floc composed of bacteria and protozoa which is to be combined with wastewater in order to carry out the biological treatment process also known as activated sludge in the membrane bioreactor.

Influent: in the context of the invention the term influent refers wastewater, pre-treated or not, which is pumped into the bioreactor containing the mixed liquor.

Upstream or downstream: in the context of the invention the terms upstream or downstream are used in relation to the position of a component, taking into account the sense of the hydraulic flow. Thus taking a particular component of the system into consideration, the term upstream is to be understood as the hydraulic position before this particular component, while the term downstream is to be understood as the hydraulic location after this particular component.

### State of the art

Most existing wastewater treatment systems consist of a primary physical treatment and a biological treatment (activated sludge) followed by separation of the sludge and the water by clarification. Membrane bioreactor (MBR) has been introduced since 20 years as an alternative to activated sludge. In MBR, biological degradation and physical separation (by membrane) are combined in one reactor allowing for lower footprint and higher produced water quality. MBR is costlier, thus it is usually operated in more sensitive areas where water quality is sensitive or in order to be reuse for non-potable applications.

Membranes used in MBR are typically ultrafiltration (UF) or sometimes microfiltration (MF). UF are porous membranes which allow for the rejection of suspended solids, macromolecules such as proteins, some viruses but are not efficient towards rejections of smaller molecules like salts, pesticides, pharmaceuticals.

With fresh water resources being increasingly limited, depleted or contaminated, the use of alternative water resources such as recycled wastewater for drinking water production is of high interest as well was water for reuse. Therefore, the existing wastewater treatment systems need to be operated to satisfy these new needs. In order to use wastewater as a source for safe potable water production, treatment processes need to be highly performant and reliable.

Typically, the need for alternative potable water resource occurs in water sensitive areas, i.e. where MBR are already implemented. As such, it is of high interest to make these MBRs to fit with high quality water production. Few advanced wastewater treatment schemes are already implemented and typically, after UF or MBR treatment, reverse osmosis (RO) and oxidation treatment are used to allow for much higher rejection and degradation of most contaminants. Also, the concept of double barrier has been developed for direct potable water reuse and consists in having two consecutive high rejection steps. Produced water quality of MBR-RO could be high and is sometimes implemented for indirect potable water reuse (i.e. replenishment of a dam or aquifer) but still have difficulty to satisfy very high exigence of reliability and quality for direct potable water requirements. This is due to the fact that UF or MF membranes used in MBR are porous, typically they are not rejecting emerging contaminants, and thus there is always questioning about their potential to act as a robust barrier to all types of contaminants. It is preferred to operate a system with a double dense barrier concept for potable water reuse, typically using dense membrane such as RO which features high rejection of all contaminants.

The concept of forward osmosis (FO) has been recently developed (lab and pilot scale) for wastewater treatment. As for RO, FO is a dense membrane but the permeation of water is driven by the difference in salinity gradient on both sides of the membrane. In practice, such scheme is implemented thanks to the use of a high salinity solution (typically seawater or NaCl) also called draw solution. In a first step the water can be withdrawn from an impaired water source (such as wastewater) to the draw solution. In the second step the water is separated from the draw solution, typically using reverse osmosis. As such FO is composed of double dense barriers (FO+RO) and could be of interest for potable water reuse. The concept of FO has been tested in the context of MBR and is called Osmotic MBR (OMBR); instead of using a UF membrane, a FO membrane is submerged in a bioreactor. Interestingly, high rejections of contaminants and lower fouling propensity where observed. Another interest of OMBR-RO vs. MBR-RO is that in OMBR-RO there is no brine production (no waste stream from RO has to be recycled). This RO brine in MBR-RO systems is apparently quite a (costly) problem. Another problem is that salinity build-up also occurs in the reactor resulting from the high rejection of the FO membrane. The increase of salinity affects the depurating efficiency of the microorganisms resulting in unstable operation of the OMBR.

To tackle the problem of unstable operation of the OMBR, some hybrid systems as the ones disclosed in WO 2014/110429 A1 or in CN 103102038 A have been proposed. In these systems the osmotic membrane bioreactor is coupled and operated in parallel to a looser/porous membrane (typically UF or MF membrane as commonly used in MBR). This hybrid called UF-OMBR allows for production of high water quality thanks to the OMBR part and lower water quality and salt removal via the UF/MF part. The main limitation of such hybrid system is the requirement to operate two membrane skids in parallel in the same mixed liquor basin. Such systems are difficult to implement since they require investing and operating two membrane technologies in parallel. Typically, distinct aeration systems, membrane modules, pumping systems will be required.

### Summary of the invention

It is thus an object of the invention to provide a method for operating a membrane bioreactor of a water treatment system which allows producing a high quality water stream and which may be adapted to the incoming wastewater and the production needs, in a flexible and economical manner. This purpose is achieved by means of a method of the type indicated at the beginning, characterized in that in accordance to the incoming wastewater and the water production needs it comprises: [a] a replacing step in which at least one of said UF or MF membrane modules of said membrane stack is replaced by at least one corresponding semipermeable membrane module in the same membrane stack, said semipermeable membrane module having an inlet and an outlet, and [b] a forward osmosis step in which a draw solution is circulated between said inlet and said outlet of said at least one semipermeable membrane module, said draw solution having a higher osmotic pressure than the osmotic pressure of said mixed liquor such as to produce a diluted draw solution stream downstream of said membrane stack.

In the invention, the draw solution is the solution responsible for providing the forward osmosis effect in the semipermeable membranes. As already explained, the draw solution has a higher osmotic pressure than the osmotic pressure of the mixed liquor.

Due to this gradient, water from the mixed liquor is driven through the membrane into the draw solution to reduce the salinity of the draw solution. Of course, thanks to the forward osmosis, the osmotic pressure is reduced after the draw solution is circulated between the inlet and the outlet of the semipermeable membrane due to the osmosis effect. Due to this, generally speaking upstream of the membrane stack the concentration of the draw solution is higher than downstream of it. Then a concentrated draw solution is circulated into the semipermeable membrane and after the forward osmosis step there is obtained a diluted draw solution downstream of the membrane stack.

Also preferred non limiting draw solutions for the method of the invention are brine or seawater with a higher osmotic pressure than the wastewater. However other solutions are possible like salt solutions (typically monovalent or divalent salts) ionic organic draw solutes, ammonium bicarbonate, sugars, hydrogels. In principle, any compounds having an osmotic pressure higher to the mixed liquor could come into consideration. In practice any compound that is well rejected by the membrane, preferably non-toxic and relatively cheap could be used as a draw solution. The draw solution can also be a fertilizer which needs to be diluted with water before its disposal on the soil.

Even if it is not an object of the invention, as the skilled person is aware of the mixed liquor basin preferably includes an aeration device, as well as all control features desired such as temperature, pH, conductivity and level sensors, as well as any other sensors for monitoring the desired parameters. Also in cases where the mixed liquor basin is very big, also an optional stirring device can come into consideration. If the basin is big or if there are several steps in the biological processes (anoxic, aerobic, anaerobic) then a stirrer helps to avoid sedimentation.

Also the reactor, within the scope of the invention can be either aerobic or anaerobic.

Additionally, in the context of the invention, the semipermeable membrane module is typically a FO membrane module, i.e. having a dense membrane with a pore size below 0.01 micron and allowing for significant use of osmotic pressure as driving force for water transfer at the forward osmosis step. This membrane typically allows for high rejection of all water pollutants including viruses, micropollutants and salts. Alternatively, in some applications, more porous membranes (nanofiltration membranes (NF) or even UF membranes can be used with divalent salts or even larger molecules used as draw solutions at the condition that the combination of both membrane and draw solution allow for significant water flux and high rejection of draw molecules.

Furthermore, the feed stream into the MBR, also called influent can have different origins. For example, the water to be treated can be domestic or industrial impaired water, rainwater, seawater, brackish water, impaired surface or underground water or the like.

Also it is to be taken into account that in the broadest sense of the invention the membrane stack of the bioreactor can be submerged in the mixed liquor basin or arranged to the side of the mixed liquor basin. This second configuration is known in the art as sidestream treatment. However, in a preferred embodiment, the membrane stack is submerged in the mixed liquor basin.

The method according to the invention has several advantages over the prior art. Firstly, it allows for the partial or total retrofitting of existing MBR to OMBR, also known as upgrading, without requiring physical extension of the MBR in terms of space occupied by the MBR in the water treatment system. Not only investment costs will be significantly reduced thanks to the reuse of existing the mixed liquor basin, but also several equipment, such as the aeration device, the membrane stack or the automatic operation systems can be used for both membrane modules. Additionally, the implementation of the technology can be performed quickly and with limited impact on the ongoing operation of the system. Also in the case of new MBR systems, the space required for the implementation of the method and the bioreactor according to the invention can be optimised and some of the equipment can be synergistically used. The concept according to the invention offers also the flexibility to operate the system either as MBR, OMBR or as a combination in parallel. As such, it can be adapted easily to the water quality needs and seasonal variation demand by shifting from MBR to OMBR and reversely very easily, just by replacing the corresponding interchangeable membrane modules. Therefore, when producing reusable water operating in parallel as MBR and OMBR two independent water streams can be obtained. The one obtained from the UF or MF membrane, corresponding to the standard MBR operation mode coming from the UF or MF membrane modules is purified non-potable water, while the stream coming from the semipermeable membrane modules, or the so-called OMBR operation mode, can be either potable or non-potable treated water depending on the post-treatment step carried out downstream of the membrane stack.

Thanks to the dual operation in one/similar stack, synergies can be obtained not only regarding membrane modules but also in terms of aeration since only one single aeration system is required. Additionally, supervision and maintenance are also simplified, since many of these features serve for operating any of both membrane modules.

Additionally, having both MBR and OMBR membrane modules in the same stack allows for a higher homogeneity of the sludge in comparison with UF-OMBR already described in the prior art. Typically in UF-OMBR, attention has to be paid on having good sludge mixing and transfer in between UF and OMBR stacks to avoid for example local build-up of salinity within the OMBR stack. The higher intimacy/proximity of the modules according to the method of the invention favours higher homogeneity and consequently better efficiency in the overall system.

The invention further includes a number of preferred features that are object of the dependent claims and the utility of which will be highlighted hereinafter in the detailed description of an embodiment of the invention.

In preferred embodiment the method further comprises a post-treatment step in which said draw solution is post-treated downstream of said membrane stack. The diluted draw solution obtained downstream of the membrane stack is post-treated in order for it to be reused. In its broadest sense the post-treatment can be any of the processes for extracting water from the draw solution. Among the possible treatments the diluted draw solution can be separated by thermal, chemical or membrane related processes. Membrane processes can include reverse osmosis, nanofiltration or membrane distillation thus allowing to obtain purified potable or non-potable water.

Alternatively, instead of the post-treatment step, the diluted draw solution obtained from the forward osmosis step can be poured into a natural water environment such as the sea, a river, a lake or the like or on the soil. The forward osmosis step provides for environment preservation in a simple manner, and the wastewater after the biological and physical treatment does not harm the water source receiving the treated water.

In another embodiment of the invention, said post-treatment step comprises a reverse osmosis (RO) step downstream of said membrane stack in order to obtain a potable water stream and a concentrated draw solution stream, said concentrated draw solution stream being recirculated to said inlet of said at least one semipermeable membrane module. This allows for obtaining downstream of the RO step a stream of potable water and a stream of reconcentrated draw solution. The reconcentrated draw solution leads to an improved performance of the forward osmosis step, since the higher the osmotic pressure gradient between the mixed liquor and the draw solution, the better will be the performance of the forward osmosis step. Another further advantage of this embodiment is that thanks to this reverse osmosis step, the draw solution works in closed loop system such that no brine is produced. Therefore, the environment is better preserved.

According to another embodiment of the invention in said replacing step several UF or MF membrane modules are replaced by the same number of semipermeable membrane modules and said replacing semipermeable membrane modules are arranged in said membrane stack in an alternate manner with said UF or MF membrane modules. In this case, each semipermeable membrane module has adjacent thereto a UF or MF membrane module. This embodiment is especially advantageous in case the bioreactor is driven alternatively between the MBR mode and the OMBR mode that is when only one type of membranes is operated. In this case the non-working membranes, e.g. the UF or MF membranes or alternatively the FO membranes, serve as a physical barrier and as spacers between the working membranes. Additionally, it has been noted that there is salinity build up close to the semipermeable membranes. So thanks to the proximity of FO and UF membranes there is better balance and homogeneity in the salt concentration. It has been detected that even if not all membranes are working they allow to keep the same air bubble profile in the system. This air bubble profile is especially critical to avoid membrane fouling, that is solute or particle deposition on the membrane surface or into the pores thereof notably reducing the membrane performance. Finally, it must be pointed out, that in this embodiment the alternate operating modus does not necessarily mean that the bioreactor is operated always in a single mode, but rather that the operating mode can be switched very rapidly between MBR, OMBR or combined MBR/OMBR operation mode depending on the incoming feed stream and the required final water stream quality.

In an alternative embodiment in said replacing step several membrane modules of said plurality of UF or MF membrane modules are replaced by the same number of semipermeable membrane modules and the resting UF or MF membrane modules are arranged side by side in said membrane stack forming a first group, while the replacing semipermeable membrane modules are also arranged side by side in said membrane stack adjacent to said first group of membrane modules forming a second group of membrane modules. This embodiment seems to be more suitable for those cases in which the system is operated in parallel that is as an MBR and OMBR simultaneously. However, the alternate operation modus could also be carried out in this case.

In another embodiment seeking for replacement simplification, said UF or MF membrane modules are of plate and frame or hollow fibre type, each UF or MF membrane module of said plurality of UF or MF membrane modules comprises an inlet and an outlet said inlet being removably sealed by sealing means and said replacement step consists of removing said sealing means of said inlet and connecting said inlet of said corresponding UF or MF membrane modules to a draw solution circuit. This configuration is specially adapted for small systems, such as lab scale or the like, in which the MBR operator can have easy access to the whole perimeter of the membrane stack. In this case, especially in those cases in which the membrane stack is submerged, there is no need to remove the membrane stack from the mixed liquor basin and simply by connecting and disconnecting the corresponding ducts and inlet caps the MBR can be transformed in OMBR and vice versa with little effort.

Another object of the invention is to provide a membrane bioreactor which provides flexibility for producing a high quality water stream and which may be adapted to the incoming wastewater and the production needs, in an economical manner avoiding cumbersome installation conditions. This purpose is achieved by means of a membrane bioreactor characterised in that it further comprises a draw solution circuit, containing a draw solution having a higher osmotic pressure than said mixed liquor and [a] at least one semipermeable membrane module having an inlet and an outlet, and [b] draw solution circulating means, and in that [c] said at least one semipermeable membrane module is configured to be arranged in one of said supports of said plurality of supports of said membrane stack for replacing a corresponding UF or MF membrane module of said plurality of UF or MF membrane modules.

This type of membrane stack can be easily installed in existing MBR systems with a reduced complication compared to a tandem system described in the art. Also, there is a reduced technical and economical effort for new systems.

The membrane stack can be separated from the bioreactor. However, in a preferred embodiment the membrane stack is submerged in said mixed liquor basin.

In another embodiment of the invention seeking for potable water production the bioreactor further comprises: [a] draw solution recovery means arranged downstream of said membrane stack for obtaining a potable water stream and a concentrated draw solution stream, and [b] duct means for hydraulically connecting said semipermeable membrane module, said draw solution circulating means and said draw recovery means in order for said draw solution to be circulated within said draw solution circuit.

In another preferred embodiment said at least one semipermeable membrane modules are made from a cellulose triacetate or a thin film composite membrane.

Also preferably, said membrane stack is submerged in said mixed liquor basin.

In another embodiment, pursuing the maximum flexibility for adapting the bioreactor to the water quality needs and seasonal variation demand by shifting from MBR to OMBR and vice versa the UF or MF membrane modules and said semipermeable membrane modules are of plate and frame type. Especially in small systems due to the rapid and easy access to each single membrane, the membrane replacement can be carried out fast and very easily.

In order simplify the replacement of the membranes in the easiest possible way, in a preferred embodiment of the bioreactor said inlet and said outlet of said at least one semipermeable membrane module are arranged on the same side of the frame of said at least one semipermeable membrane module. This configuration is especially advantageous for the plate and frame configuration.

In another embodiment, said inlet and said outlet of said semipermeable membrane modules are arranged on the upper part of said frame when said semipermeable membrane module is arranged in said membrane stack in service position. Again, this facilitates the connection and disconnection of the ducts in order to remove and replace the corresponding membrane modules. In this way it is not imperative to remove the membrane stack from the membrane basin. Therefore, the membrane replacement can take place in a very short period of time, thus reducing operation costs and shortening production stop periods.

Finally, in another embodiment, in order to increase the semipermeable membrane module lifetime said draw solution circulating means are arranged downstream of said membrane stack. This arrangement reduces the stress in the semipermeable membranes in comparison to the arrangement upstream of the membrane stack.

Finally, the invention also solved the cited problems with a water treatment system comprising a membrane bioreactor according to the previous paragraphs.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 shows a schematic view of a water treatment system comprising a membrane bioreactor according to the invention.
Figure 2 shows a schematic view of a water treatment system comprising a second membrane bioreactor according to the invention.
Figure 3 shows a schematic view of a water treatment system comprising a third membrane bioreactor according to the invention.
Figure 4 shows a schematic view of a water treatment system comprising a fourth membrane bioreactor according to the invention.
Figure 5 shows a schematic view of a water treatment system comprising a fifth membrane bioreactor according to the invention.
Figure 6 shows a schematic longitudinal section view of a semipermeable membrane module according to the invention.
Figure 7 shows a schematic longitudinal section view of a second semipermeable membrane module according to the invention.
Figure 8 shows a schematic view of the water treatment system comprising a membrane bioreactor of the state of the art.

### Detailed description of embodiments of the invention

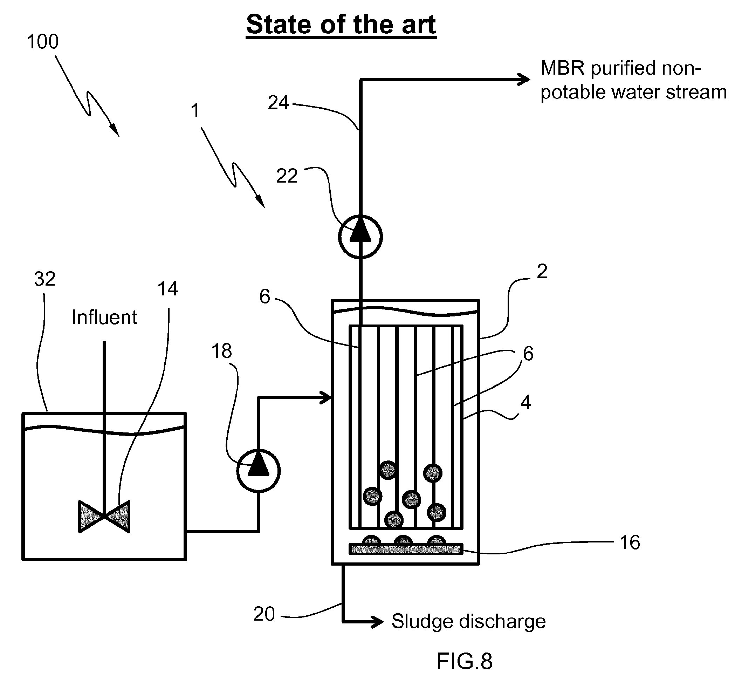

Figure 8 shows an existing water treatment system 100 of the state of the art. The system of Figure 8 shows an influent basin 32 containing wastewater to be treated. From the influent basin 32, wastewater is pumped to the membrane bioreactor 1 with pumping device 18. The bioreactor 1 comprises firstly a mixed liquor basin 2 containing the mixture of biological mass, also known as activated sludge, and wastewater. In the membrane bioreactor 1 there is submerged a membrane stack 4. The membrane stack 4 supports a plurality of UF or MF membrane modules 6. These membrane modules 6 comprise an UF or MF outlet duct 24 connected to a second pumping device 22. Even if it is not shown in detail, each membrane module 6 has the corresponding outlet duct 24. In this configuration, the MBR is operated to produce only a purified water stream, which is however not potable water. In order to prevent fouling, an air scouring device 16 arranged below the membrane stack 4.

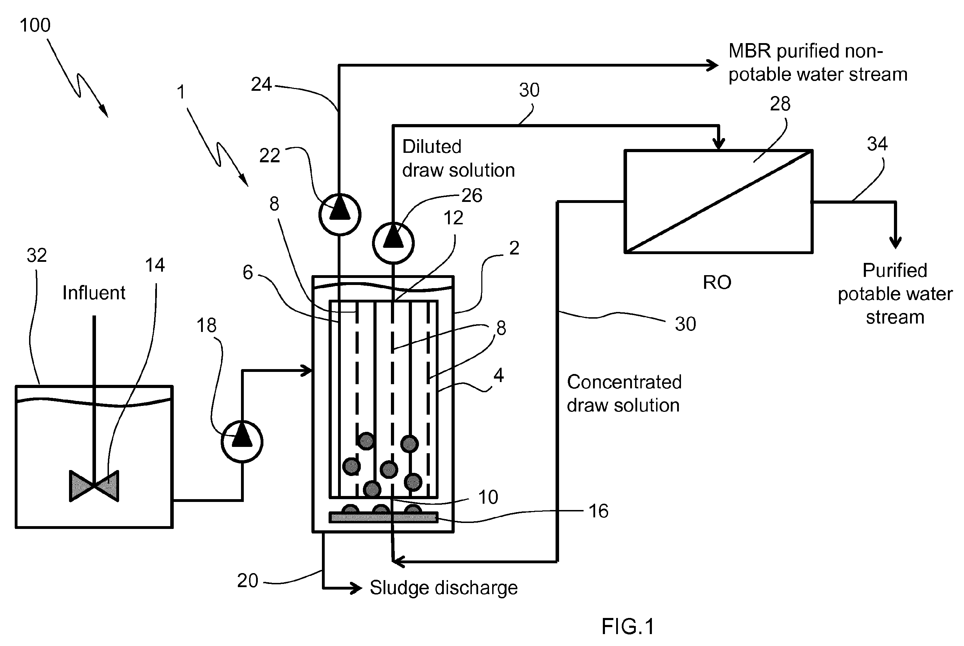

Figure 1 shows a first embodiment of a water treatment system 100 comprising a bioreactor 1 according to the invention, in which as it will be explained below, starting from the system of Figure 8 the method of the invention has been applied.

Again, upstream of the bioreactor 1, the system 100 comprises a first influent basin 32 containing the influent, it being pre-treated wastewater. In the influent basin 32 the pre-treated wastewater is preferably stirred by an agitator 14 also in order to favour the homogeneity thereof and to favour the later biological process. It must be pointed out that the first influent basin 32 is an optional feature in the water treatment system. The bioreactor 1 according to the invention is arranged downstream of the influent basin 32. In this case, the bioreactor 1 is aerobic. The bioreactor 1 comprises firstly a mixed liquor basin 2 containing the mixture of biological mass, also known as activated sludge, and wastewater. As already indicated the wastewater can have several origins such as domestic or industrial impaired water, rainwater, seawater, brackish water, impaired surface or underground water.

It must also be pointed out, that even if the system 100 is not depicted in detail, it is apparent to the skilled person that the system is equipped with all features required for the system and the membrane bioreactor to work properly, such as pumps, ducts, temperature, pH and conductivity sensors, as well as all control means required to properly operate the system.

In this embodiment, the pre-treated wastewater is pumped through a first pumping device 18 from the influent basin 32 into the mixed liquor basin 2 of the bioreactor 1 in which a membrane stack 4 is fully submerged. In this mixed liquor basin 2, the wastewater is mixed with the active sludge to carry out the biological process.

The membrane stack 4 comprises a plurality of supports not depicted in detail for receiving the corresponding membrane modules. In this preferred embodiment, the membrane modules to be mounted in the supports are of the plate and frame membrane module type. Therefore, suitable supports for this kind of membrane modules can have the shape of a rail in the shape of a U having the width of the frame of the membrane module. However other membrane module configurations, as well as other membrane supports come also into consideration in the invention. For example, hollow fibre membranes or other types of membranes already known in the art and with which a forward osmosis step can be carried out are to be taken into account. Alternatively, in cases in which the membrane stack 4 is not submerged also spiral wound and tubular membrane modules can come into consideration. Also the supports in the membrane stack 4 can have other profiles as an L-shape or others.

Additionally, this mixed liquor basin 2 full of mixed liquor is provided with an air scouring device 16 arranged below the membrane stack 4 in order to delay the fouling process as much as possible. In the mixed liquor basin 2 a non-depicted blower is associated with the air scouring device 16 in order to blow air below the membrane stack 4.

Also in its lower part, this mixed liquor basin 2 comprises a sludge discharge duct 20 in order to be able to extract the excess of activated sludge if required.

Initially, the bioreactor 1 of figure 1 is prepared for receiving UF or MF membrane modules 6. These membrane modules 6 comprise an UF or MF outlet duct 24 connected to a second pumping device 22. In this configuration, the MBR is operated to produce a purified water stream, which is however not potable water.

Thus according to the method of the invention, and depending on the water needs, starting from a bioreactor as the one shown in Figure 8, it is provided a replacing step in which several UF or MF membrane modules 6 are replaced by corresponding semipermeable membrane modules 8. Generally, the replacement step consists in disconnecting the corresponding outlet ducts 24 and removing the selected UF or MF membrane modules 6 from their supports. Afterwards, the corresponding semipermeable membrane modules 8 are placed in the supports of the membrane stack 4 where the replaced UF or MF membrane modules where mounted. It is also apparent to the skilled person that then the corresponding ducts, pumps and equipment must also be connected to the replacing semipermeable membrane modules 8 in order for the system to be operable. Also in this case the replacement step takes place in an alternate manner that is, if a particular UF or MF membrane module 6 (see the continuous lines in the mixed liquor basin 2) is considered, adjacent thereto it has only semipermeable membrane modules 8 (see the dashed lines in the mixed liquor basin). The semipermeable membrane modules 8, and in particular, plate and frame forward osmosis membrane modules are configured to be arranged in the supports of the membrane stack 4. To this end, the semipermeable membrane modules 6 have the same or similar outer shape as the UF or MF membrane modules 6 in order for them to be mountable in the corresponding membrane stack 4 supports. Also preferably, the bioreactor according to the invention comprises a first set of UF or MF membrane modules 6 and a second set of semipermeable membrane modules 8, and the first set and the second set comprise the same number of membrane modules to allow the maximum flexibility.

Also preferably the semipermeable membrane modules 8 are polymeric FO membranes. In the context of the invention a polymeric membrane is a type of semipermeable membrane which is commonly used in the field of water purification or water desalination. Most typically polymeric FO membrane is normally a cellulose triacetate or thin film composite membrane like nanofiltration membranes (NF) or reverse osmosis membranes (RO). FO membrane is preferably a multilayer membrane which comprise a similar rejection layer as NF and RO membrane but differs by having a much thinner support layer to limit concentration polarisation.

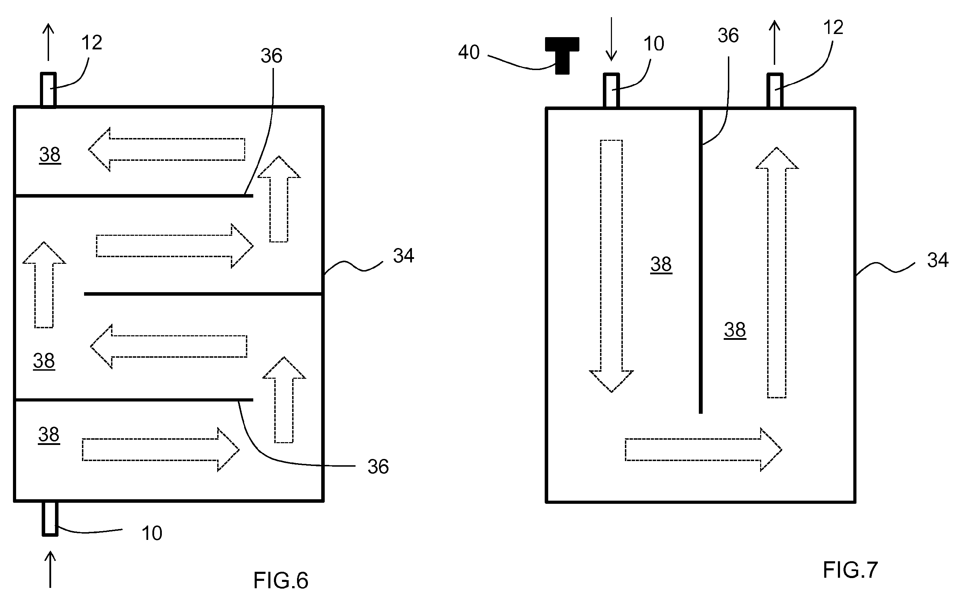

Even if it is only schematically shown in Figure 1, each of these semipermeable membrane modules 8 have an inlet 10 and an outlet 12. The inlet 10 and outlet 12 ports of the semipermeable membrane module 8 can be better appreciated in Figure 6. The inlet 10 is placed in the lower part of the membrane module frame 34, while the outlet 12 is placed above. Also, in order to avoid unstirred regions, within the membrane module, there is provided plurality of dividing walls 36 to form a stirring path 38. Thanks to these walls 36 the draw solution is conveniently stirred during the flow within the semipermeable membrane module 8.

Further, as explained above, in the figures, these semipermeable membrane modules 8 are schematically depicted with dashed lines, to differentiate them from the UF or MF membrane modules 6 which are depicted with a continuous line. It must also be pointed out that even if the semipermeable membrane modules 8 are depicted in dashed lines, this way of representation has no relation with the pore size of the semipermeable membranes relative to the pore size of UF or MF membranes.

Thus, once the UF or MF membrane modules 6 are disconnected from the corresponding outlet ducts 24 and then removed from the membrane stack 4 and the corresponding semipermeable membrane modules 8 are arranged in the supports, a draw solution circuit is arranged in the bioreactor 1 for the semipermeable membrane modules 8. To this end the corresponding inlet 10 and outlet 12 of the semipermeable membrane modules 8 are connected to the draw solution circuit by means of the ducts means 30. The circuit further comprises draw solution circulating means 26, which in this case, contrarily to the FO arrangement known in the art, is preferably a pump aspirating downstream of the membrane stack 4. It has been observed that placing the draw solution circulating means 26 downstream of the membrane stack 4 provides a duration improvement of the semipermeable membrane modules 8, since the membranes are less stressed.

Further in this embodiment, downstream of the draw solution circulating means 26, there are draw solution recovery means 28.

As it is apparent from Figure 1, all these features are hydraulically connected by means of duct means 30 in order for the draw solution to be circulated within said draw solution circuit. Additionally, control and monitoring means are also provided in order for the process to be controlled.

According to method of the invention, once the UF or MF membrane modules 6 have been fully or partly replaced by the semipermeable membrane modules 8 a forward osmosis step can be carried out. To this end the draw solution is circulated between the inlets 10 and the outlets 12 of the semipermeable membrane modules 8. The draw solution, for example sea water o water containing added NaCl, has a higher osmotic pressure than the osmotic pressure of the mixed liquor. Therefore, thanks to the osmotic pressure, water from the mixed liquor basin enters the semipermeable membrane modules 8 to produce a diluted draw solution stream downstream of the membrane stack 4.

Downstream of the membrane bioreactor 1 the diluted draw solution stream can be post-treated in several different ways. In a non- depicted embodiment of the invention the diluted draw solution can be poured in big volume of water such as the sea, a lake o the like. However, in this embodiment, the diluted draw solution stream is then post-treated in the draw solution recovery means 28 which is a membrane for carrying out a reverse osmosis step. This reverse osmosis step downstream of the membrane stack 4 of the membrane bioreactor 1 provides two streams, the first one, a purified potable water stream and the second, a concentrated draw solution stream. This concentrated draw solution stream is then recirculated to the inlet 10 of the semipermeable membrane modules 8 through duct means 30. Thanks to this concentrated draw solution stream the performance of the forward osmosis step is notably improved, since the osmotic pressure gradient is maintained upstream of the membrane stack 4.

It must be pointed out that the bioreactor 1 of this embodiment is preferably operated in alternate manner, that is for a period it operated as an MBR, while afterwards is operated as an OMBR. However, this is not compulsory and it could also work in both modes at the same time.

Also in order to control the fouling process of the membranes, the bioreactor 1 also comprises an air scouring device 16 arranged below the membrane stack 4. Specially in existing MBR premises, this air scouring is dimensioned for the MBR operation mode, therefore, the forward osmosis membrane modules can also benefit from this same device without needing to any special power increase. Additionally, in case of extreme fouling of the membrane modules, a backwash step can also be carried out, by reverting the flow direction of the circuits in order to remove the depositions on the membrane modules.

As already cited before, the wastewater may also be treated, e.g. by biological nutrient recovery and/or clarification, before it enters the bioreactor 1.

The post-treatment step can comprise several alternative embodiments such as reverse osmosis, nanofiltration, thermal distillation, membrane distillation, electrodialysis, evaporation or any other chemical or physical separation process allowing the obtaining of a product stream while producing a reusable draw solution.

Despite its significant interest, combining UF/MBR and FO/OMBR membrane modules in one stack has to overcome several challenges of the state of the art.

In the art, operation of known FO membrane systems required very different module configuration from UF usual design due to requirement of cross flow for the draw solution. Following differences must be cited:

| | UF modules | FO modules |
|---|---|---|
| Inlet/outlet | only one outlet | Inlet and outlet |
| pumping | suction | pulsion |
| channel design | no specific flow patterns | |
| flow pattern | free permeation | Optimised flow patterns to maximise mass transfer (importance of cross flow velocity, draw spacers, channel design) |
| membrane | robust membrane | thin membrane need to be better supported, operation more sensitive |

Also, in the invention further advantages can be obtained. For example in the case of new systems, more compact systems can be achieved, since in the mixed liquor basin 2 space is required for one membrane stack 4. Also other features such as air scouring, control and monitoring means can be used both for the MBR and OMBR part of the bioreactor. In the case of existing systems, as already said, an upgrade of the current system is possible without the need of widening the MBR basin.

One major cost for MBR operation is air scouring to minimize fouling. Since FO demonstrated lower fouling propensity, less air scouring may be required. Thus, operating both systems independently will lead to less air consumption (and energy costs) since it will be adjusted to each process while when you have combined process you have to use the highest air demand for both systems.

Similarly, in case of chemical cleaning, since FO and UF membranes have different chemistry, they cannot tolerate similar cleaning agents. Thus it is easier to operate them independently.

However, thanks to the invention and the fact that the semipermeable membrane modules are configured to be fitted in existing UF or MF membrane module stacks, the implementation of the method of the invention has become possible and many synergies have been obtained therefrom.

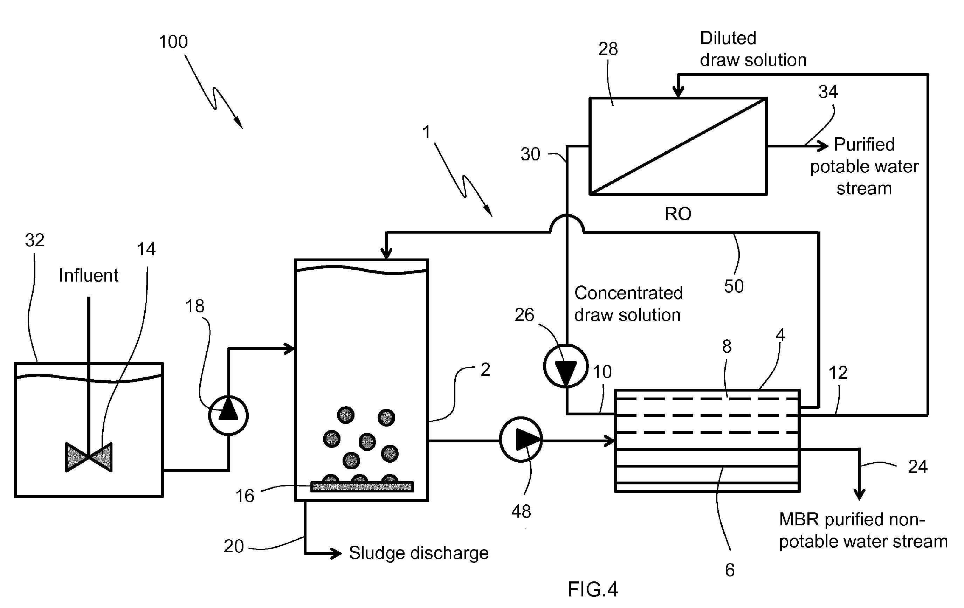

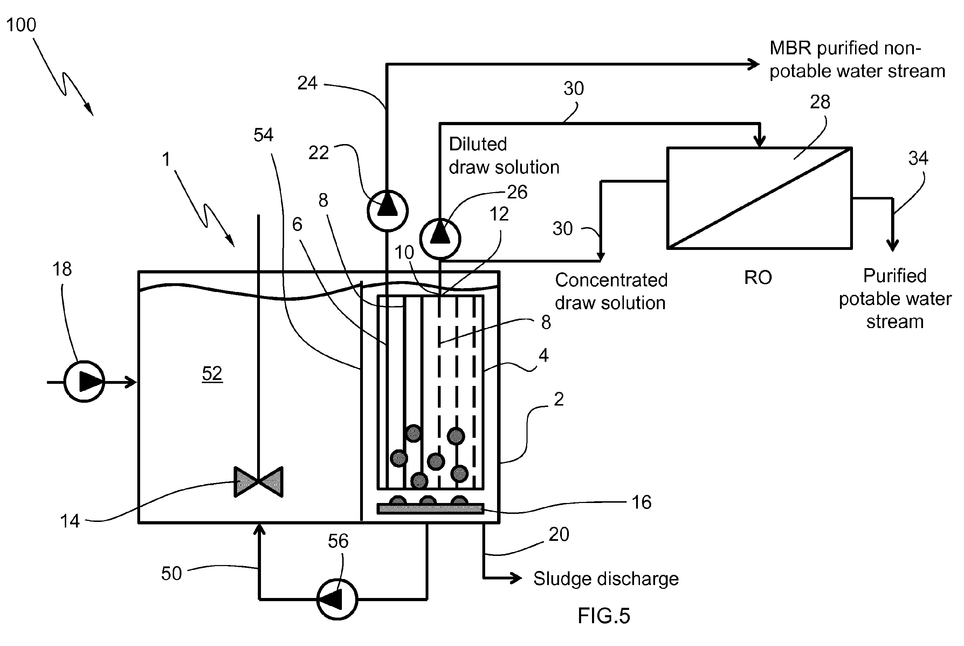

Following alternative embodiments share many features with the embodiment of Figure 1. Therefore, only the new features will be described below, while for the already described features, reference to previous paragraphs of the description is made. Also it is outlined that following embodiments show the bioreactor of the invention once the replacement step of the membrane modules has taken place. Therefore, it will be apparent to the skilled person, that the starting point prior to carrying out the method of the invention is a water treatment system similar to the one of Figure 8, except for the embodiments of Figures 4 and 5.

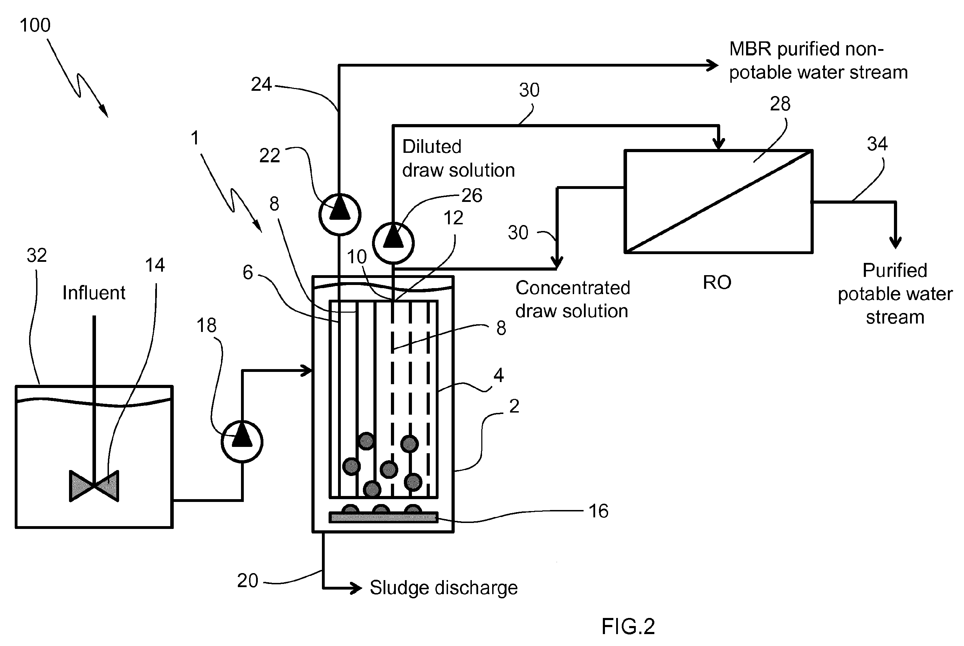

The water treatment system of Figure 2 differs from the one of Figure 1, in that the UF or MF membrane modules 6 and the semipermeable membrane modules 8 are of plate and frame type, but the inlet 10 and the outlet 12 of said at least one semipermeable membrane module 8 are arranged on the same side of the frame of the semipermeable membrane modules 8. More particularly, as it might be observed in Figure 7, the inlet 10 and the outlet 12 are arranged on the upper part of the frame 34 when said semipermeable membrane module 8 is arranged in said membrane stack 4 in service position. This makes the replacement of the membrane modules much easier. It has to be pointed out that in Figure 2 for sake of simplicity, the inlet 10 and the outlet 12 have been depicted with one single line corresponding to the inlet and the outlet of one semipermeable membrane module 8. However, this is only a simplification of the diagram and it is to be understood that all semipermeable membrane modules 8 (with dashed lines) comprise the corresponding inlets 10 and outlets 12 on their upper sides of the frames as shown in Figure 7 and that the pump provides the suction to the corresponding outlets 12 of each membrane module 8. Also in this case, in order to avoid unstirred regions, within the membrane module, there is provided a single dividing wall 36 to form a stirring path 38. Again, this stirring path, such that the draw solution is conveniently stirred during the flow within the semipermeable membrane module 8. Alternatively, the inlet 10 and the outlet 12 can be arranged on the side of the frame 34 when said semipermeable membrane module 8 is arranged in said membrane stack 4 in service position.

Further, in the semipermeable membrane module 8 of Figure 7 is conceived for working both as a UF or MF membrane module, as well as a semipermeable membrane module 8. To this end, the inlet 10 or the outlet 12 can be removably sealed by sealing means 40, in the shape of a sealing cap. The sealing cap allows for modification of a UF or MF membrane module into a forward osmosis membrane module without the need of removing the complete module from the membrane stack 4. To this end, the replacement step consists of removing the sealing means 40 of the inlet 10 and the outlet duct 24 and connecting these inlet 10 and outlet 12 to a draw solution circuit through ducts means 30. In Figure 7, the membrane module is depicted in the position working as a semipermeable membrane, since the sealing cap is removed from the inlet 10.

Also a relevant difference in this case is that the UF or MF membrane modules 6 are arranged side by side in said membrane stack 4 forming a first group of membrane modules, while the replacing semipermeable membrane modules 8 are also arranged side by side in the membrane stack 4 adjacent to said first group of membrane modules but forming a second group of membrane modules.

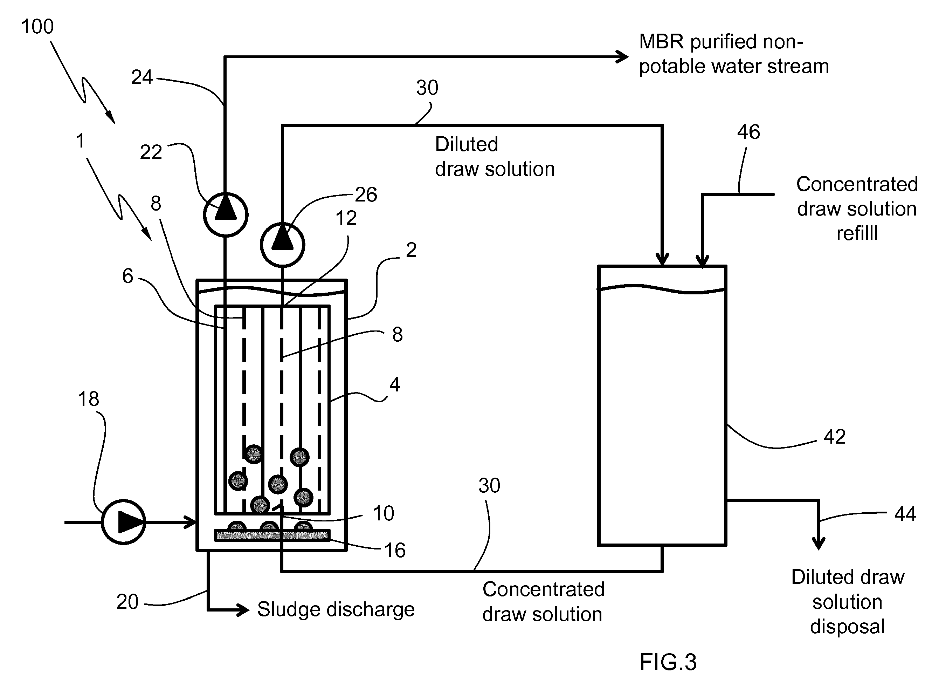

Figure 3, shows a third embodiment of a water treatment or reuse system including the bioreactor 1 according to the invention similar to the one of Figure 1. As it is apparent from Figure 1, again the semipermeable membrane modules 8 are arranged in an alternate manner with the corresponding UF or MF membrane modules 6.

The first difference relative to Figure 1 is that in this case, the influent is not contained in an influent basin. Therefore, in this case the influent is not pre-treated and it is directly fed into the bioreactor basin 2. As it has already been mentioned, this influent basin 32 is not essential for the invention.

On the other hand, another relevant difference in this case, is that the system 100 configured without a draw solution reconcentration step. In this case no reverse osmosis step is provided downstream of the bioreactor 1. This application is especially convenient for fertigation (irrigation + fertilisation). Due to the high concentration of fertilizers it might be required to dilute them before they can be irrigated on a soil. In this case, the system 100 comprises a draw solution basin 42 containing a volume of draw solution, which is a for example the highly concentrated fertilizer. The fertilizer has an osmotic pressure higher than the osmotic pressure of the mixed liquor. Through the forward osmosis step, water is absorbed from the mixed liquor basin 2 into the fertilizer to dilute it. Once the whole volume of draw solution has a reasonable low osmotic pressure, and thus the fertilizer is diluted, the draw solution can be disposed on the soil through the draw solution disposal duct 44.

Then after disposal of the diluted draw solution on the soil, the draw solution basin 42 can be refilled through the refilling duct 46 with additional highly concentrated draw solution, having a higher osmotic pressure in order to newly dilute this draw solution for later disposal.

Figure 4 shows another water treatment system 100 with a membrane bioreactor 1 arranged in the so called sidestream configuration. In the sidestream configuration the membrane stack 4 is placed outside the mixed liquor basin 2. Therefore, a mixed liquor pump 48 is arranged upstream of the membrane stack 4 in order to feed the mixed liquor to be treated into the membrane stack 4. Finally, a recirculation duct 50 connects the membrane stack 4 with to the mixed liquor basin 2 for recirculation of the mixed liquor.

Similarly, to the embodiment of Figure 2, in the replacing step, several UF or MF membrane modules 6 are replaced by the same number of semipermeable membrane modules 8. Also as it is apparent, in this case, the resting UF or MF membrane modules 6 are arranged side by side in the membrane stack 4 forming a first group, while the replacing semipermeable membrane modules 8 are also arranged side by side in said membrane stack 4 adjacent to the first group of membrane modules forming a second group of membrane modules. In this case, the starting point prior to carrying out the method of the invention would be a sidestream bioreactor as the one of Figure 4, but comprising only UF and MF membrane modules 6. Also all features related with the forward osmosis step and the corresponding post-treatment step would not be included in this starting membrane bioreactor.

Also a relevant difference in this case is that the draw solution circulating means 26 are arranged upstream of the membrane stack 4, such that instead of operating by aspirating downstream of the membrane stack 4, the membrane bioreactor is pumped in pulsion, which is the common pump arrangement in the art.

Finally, Figure 5 shows a system 100 in which the membrane bioreactor 1 comprises an additional anoxic tank 52 on the left of the mixed liquor basin 2. In this case, the mixed liquor goes from left to right by overflow over the dividing wall 54, while from right to left the mixed liquor is pumped back in the recirculation duct 50 by the recirculation pump 56. Again in this case, the starting point would be a bioreactor similar to the one depicted in Figure 5 but with the membrane stack 4 containing only only UF and MF membrane modules 6. Also all features related with the forward osmosis step and the corresponding post-treatment step would not be included in this starting membrane bioreactor.

The embodiments described here above are non-limiting examples, such that the skilled person will understand that beyond the examples shown and within the scope of the invention multiple combinations of the claimed features are also possible.

## Claims

1. Method for operating a membrane bioreactor (1) of a water treatment system for water production, said membrane bioreactor (1) comprising a mixed liquor basin (2) and a membrane stack (4) with a plurality of UF or MF membrane modules (6) operable to produce a non-potable water stream, **characterized in that** in accordance to the incoming wastewater and the water production needs it comprises:
[a] a replacing step in which at least one of said UF or MF membrane modules (6) of said membrane stack (4) is replaced by at least one corresponding semipermeable membrane module (8) in the same membrane stack (4), said semipermeable membrane module (8) having an inlet (10) and an outlet (12), and
[b] a forward osmosis step in which a draw solution is circulated between said inlet (10) and said outlet (12) of said at least one semipermeable membrane module (8), said draw solution having a higher osmotic pressure than the osmotic pressure of said mixed liquor such as to produce a diluted draw solution stream downstream of said membrane stack (4).

2. The method according to claim 1, **characterized in that** it further comprises a post-treatment step in which said draw solution is post-treated downstream of said membrane stack (4).

3. The method according to claim 2, **characterized in that** said post-treatment step comprises a reverse osmosis step downstream of said membrane stack (4) in order to obtain a potable water stream and a concentrated draw solution stream, said concentrated draw solution stream being recirculated to said inlet (10) of said at least one semipermeable membrane module (8).

4. The method according to any of claims 1 to 3, **characterised in that** in said replacing step several UF or MF membrane modules (6) are replaced by the same number of semipermeable membrane modules (8) and **in that** said replacing semipermeable membrane modules (8) are arranged in said membrane stack (4) in an alternate manner with said UF or MF membrane modules (6).

5. The method according to any of claims 1 to 4, **characterised in that** in said replacing step several membrane modules of said plurality of UF or MF membrane modules (6) are replaced by the same number of semipermeable membrane modules (8) and **in that** the resting UF or MF membrane modules (6) are arranged side by side in said membrane stack (4) forming a first group, while the replacing semipermeable membrane modules (8) are also arranged side by side in said membrane stack (4) adjacent to said first group of membrane modules forming a second group of membrane modules.

6. The method according to any of claims 1 to 5, **characterised in that** said UF or MF membrane modules (6) are of plate and frame or hollow fibre type, **in that** each UF or MF membrane module (6) of said plurality of UF or MF membrane modules (6) comprises an inlet (10) and an outlet (12), said inlet (10) being removably sealed by sealing means (40) and **in that** said replacement step consists of removing said sealing means (40) of said inlet (10) and connecting said inlet (10) of said corresponding UF or MF membrane modules (6) to a draw solution circuit.

7. A membrane bioreactor (1) comprising a mixed liquor basin (2) and a membrane stack (4), said membrane stack (4) comprising a plurality of supports for receiving and a plurality of UF or MF membrane modules (6) to be arranged in said plurality of supports, **characterised in that** it further comprises a draw solution circuit, containing a draw solution having a higher osmotic pressure than said mixed liquor and
[a] at least one semipermeable membrane module (8) having an inlet (10) and an outlet (12), and
[b] draw solution circulating means (26),
and **in that**
[c] said at least one semipermeable membrane module (8) is configured to be arranged in one of said supports of said plurality of supports of said membrane stack (4) for replacing a corresponding UF or MF membrane module (6) of said plurality of UF or MF membrane modules (6).

8. The membrane bioreactor (1) of claim 7, **characterised in that** it further comprises:
[a] draw solution recovery means (28) arranged downstream of said membrane stack (4) for obtaining a potable water stream and a concentrated draw solution stream, and
[b] duct means (30) for hydraulically connecting said semipermeable membrane module (8), said draw solution circulating means (26) and said draw recovery means (28) in order for said draw solution to be circulated within said draw solution circuit.

9. The membrane bioreactor (1) of claim 7 or 8, **characterised in that** said membrane stack (4) is submerged in said mixed liquor basin (2).

10. The membrane bioreactor (1) according to any of claims 7 to 9, **characterised in that** said at least one semipermeable membrane modules (8) are made from a cellulose triacetate or a thin film composite membrane.

11. The membrane bioreactor (1) according to any of claims 8 to 10, **characterised in that** said UF or MF membrane modules (6) and said semipermeable membrane modules (8) are of plate and frame type.

12. The membrane bioreactor (1) according to claim 11, **characterised in that** said inlet (10) and said outlet (12) of said at least one semipermeable membrane module (8) are arranged on the same side of the frame of said at least one semipermeable membrane module (8).

13. The membrane bioreactor (1) according to claim 12, **characterised in that** said inlet (10) and said outlet (12) of said semipermeable membrane module (8) are arranged on the upper part of said frame when said semipermeable membrane module is arranged in said membrane stack (4) in service position.

14. The membrane bioreactor (1) according to any of claims 7 to 13, **characterised in that** said draw solution circulating means (26) are arranged downstream of said membrane stack (4).

15. Water treatment system (100), **characterised in that** it comprises a membrane bioreactor (1) according to any of claims 7 to 14.
